# EUROPEAN PATENT APPLICATION

(11) **EP 0 726 357 A1**
(43) Date of publication of application: **14.08.1996**
(21) Application number: 96300573.1
(22) Date of filing: 26.01.1996
(51) Int. Cl.: D21H 23/06, C02F 1/50

(54) **Inhibiting anaerobic production of volatile fatty acids and hydrogen by bacteria**

(30) Priority: 07.02.1995 US 384989; 25.04.1995 US 428592
(71) Applicant: BETZ LABORATORIES INC., Trevose, PA 19053-6783 (US)
(72) Inventor: Gurijala, Koteswara R., Jacksonville, FL 32259 (US); Singleton, Freddie L., Switzerland, FL 32259 (US)
(74) Representative: W.P. Thompson & Co.

(57) **Abstract**

A method for anticipating and for inhibiting the production and ac cumulation of metabolic products by hydrolytic-fermentative bacteria in an environment. The method has the steps of monitoring for the presence of hydrogen or acetate in an environment and adding a biocide or a non-biocidal electron acceptor to the environment to inhibit bacteria growth and the subsequent production of and the accumulation of bacterial metabolic products in the environment. The method is particularly well suited for inhibiting bacteria growth in a paper mill to prevent the accumulation of hydrolytic-fermentative bacteria by-products, especially volatile fatty acids and hydrogen, in paper mill process water and paper product.

## Description

### FIELD OF THE INVENTION

The present invention relates to inhibition of the formation of bacterial metabolic products. More particularly, the present invention relates to inhibition of the anaerobic formation of metabolic products of hydrolytic fermentative bacteria.

### BACKGROUND OF THE INVENTION

Although the present invention has general applicability to any anaerobic environment where hydrolytic-fermentation results in formation of hydrogen and volatile fatty acids (VFA's), such as anaerobic industrial process fermenters and anaerobic wastewater digesters, the present invention will be discussed in detail as it concerns aqueous anaerobic environments in pulp or paper processing systems.

In a naturally occurring microbial ecosystem, under aerobic conditions bacteria mineralize complex organic molecules to CO₂ and H₂O. Under anaerobic conditions, the complete anaerobic digestion of complex organic compounds requires at least three trophic groups of microorganisms, which form a microbial food chain or web and includes hydrolytic-fermentative bacteria, syntrophic acetogenic bacteria, and methanogenic bacteria. The process begins with the breakdown of complex materials such as cellulose, starch, and hemicellulose by the hydrolytic-fermentative bacteria into simple compounds such as hydrogen, formate, acetate, propionate, butyrate, ethanol, and the like.

The acetogenic bacteria then convert the metabolic products of the first group into direct methanogenic precursors, acetate and hydrogen or formate. Syntrophic acetogenic bacteria convert the above substrates only in association with a hydrogen-utilizing partner (usually a methanogen) to prevent accumulation of the intermediate product hydrogen or formate and, as a result, keeps the conversion of the metabolic products into acetate and hydrogen or formate thermodynamically favorable.

The third group contains the methanogenic bacteria. Methanogens utilize the acetate, H₂, and formate produced by the other trophic groups to form methane and CO₂.

A portion of the materials formed by the hydrolytic-fermentative bacteria, namely acetate, propionate and butyrate are called volatile fatty acids (VFA's). VFA's, and H₂ are produced by both facultative anaerobes (organisms which normally grow aerobically but can grow anaerobically) and by strict anaerobes (organisms which grow only anaerobically). VFA's, and H₂ are consumed by strict anaerobes.

Pulp or paper mills ("papermills") provide environments which are ideal locations for the growth of bacteria. Papermills provide bacteria food in the form of pulp which contains cellulose and other complex organic molecules and a warm aqueous environment. Paper mills also sequentially aerate and deaerate pulp during paper production thereby providing environments in which strict aerobe and strict anaerobe growth is inhibited and facultative anaerobe growth is fostered. As a result, paper mills foster the growth of hydrolytic-fermentative bacteria which produce H₂ and VFA's. Paper mills experience considerable economic loss due to customer rejection of paper products having an objectionable odor, usually caused by the presence of VFA's which become trapped in the paper's structural matrix during paper production. Paper mills also are subject to explosion hazards from evolution and accumulation of H₂.

Currently, paper mills are under increased pressure from environmental conservation concems to utilize recycled paper as a raw material and to reuse process water. Fresh pulp, fresh process water, recycled paper and recycled process water all tend to introduce bacteria into the paper mill system. Thus, paper mills are under a constant threat that bacteria will produce hydrolytic-fermentative metabolic products in undesirable quantities, tainting the finished paper product and/or posing hazards to paper mill personnel.

Individual facultative anaerobes which form VFA's and H₂ are not visible to the naked eye so their presence in small quantities is not easily detected. H2 is odorless, however VFA's have a relatively strong odor. Thus the most common way the presence of VFA producing bacteria is detected in a particular environment is by the presence of VFA odor. The facultative bacteria are then killed with a biocide, however since there is not an economical way to remove VFA's which have accumulated, the destruction of the malodorous pulp and paper is generally necessary. However, a problem also exists with adding biocidal compositions to pulp and paper mill systems. Biocides by their nature are often toxic to biological organisms other than the target bacteria which form the objectionable metabolic by-products. Therefore, it is not always desirable to use a biocide to inhibit the growth of bacteria, especially where pulp and paper mill effluent standards restrict the use of biocides.

A need therefore exists for a method to detect the presence of hydrolytic-fermentative bacteria in an aqueous pulp and paper processing system and to inhibit the growth of the bacteria, to thereby anticipate and inhibit the production and accumulation of hydrolytic-fermentative bacterial metabolic products.

A need also exists for methods of inhibiting the formation of hydrolytic-fermentative bacterial metabolic products which do not result in the death of the bacteria (i.e., non-biocidal methods).

Thus, it is an object of certain embodiments of this invention to provide a method to anticipate and inhibit the production and accumulation of volatile fatty acids by hydrolytic-fermentative bacteria in an anaerobic pulp and paper processing stream.

It is also an object of certain embodinents of this invention to provide a non-biocidal method to inhibit the formation of hydrolytic-fermentative bacterial metabolic products in an anaerobic environment.

### SUMMARY OF THE INVENTION

The present invention provides a method for inhibiting production of volatile fatty acids by hydrolytic-fermentative bacteria in an anaerobic pulp and paper environment. The method utilizes hydrogen as an indicator of the presence of hydrolytic-fermentative bacteria in the anaerobic environment. The method comprises a) identifying hydrogen concentration in an anaerobic pulp and paper processing environment and b) treating the environment with a biocide to inhibit the growth of bacteria and to thereby inhibit production and accumulation of volatile fatty acids in the environment.

In one embodiment of the invention, the method comprises adding a compound effective as an electron acceptor to an anaerobic environment. The electron acceptor functions by diverting electron flow from formation of anaerobic metabolic products such as H₂ and VFA's, to reduction of the electron acceptor. Thus, the electron acceptor inhibits VFA and H₂ formation.

In another embodiment of the invention, the invention provides a non-biocidal method for inhibiting the formation of anaerobic metabolic products by hydrolytic-fermentative bacteria comprising adding an electron acceptor to the anaerobic environment which inhibits bacterial anaerobic metabolic product formation yet does not kill the target bacteria.

### DESCRIPTION OF THE RELATED ART

Schmidt, J.E., and B.K. Ahring, 1993 in "Effects of Hydrogen and Formate on the Degradation of Propionate and Butyrate in Thermophilic Granules From an Up Flow Anaerobic Sludge Blanket Reactor", Applied Environmental Microbiology, 59:2546-2551 disclose that a correlation exists between the partial pressure of hydrogen and the degradation rate of propionate and butyrate. Generally a decrease in the degradation rate of propionate and butyrate occurs with increased hydrogen partial pressure.

In "Biology of Anaerobic Microorganisms" edited by A.J.B. Zehnder, John Wiley and Sons, New York, 1988, J.M. Tiedje at pages 179-244 discloses nitrate reduction by denitrification in the removal of nitrate from soils and from ground water. In the same text at pages 245-303, A.H. Stouthamer discloses that nitrate is known to be used by bacteria as an electron acceptor in the biological oxidation of organic carbon.

In U.S. Patent No. 4,995,987 to Whitekettle et al., a method of enhancing the efficacy of anti-microbial chemical compounds in an aqueous medium is disclosed. The method comprises adding an anionic chemical species to the medium which acts as a competing electron receptor of the terminal cellular reaction. The addition of the electron receptor results in a weakening of the microorganism leaving it vulnerable to anti-microbial chemicals.

### BRIEF DESCRIPTION OF THE DRAWINGS

The accompanying drawings, which are incorporated in and form part of the specification, illustrate, by way of example, the embodiments of the present invention and, together with the descripition, serves to explain the principles of the invention:
Figure 1 is a plot of volatile fatty acid (VFA) and hydrogen production versus time by a consortium enriched from a VFA laden mill;
Figure 2 is a plot of VFA and hydrogen production versus time from the white water of a 100% recycled paper mill;
Figure 3 is a plot of hydrogen and VFA concentration versus time in a paper mill chest effluent;
Figure 4 is a plot of VFA concentration versus time in a paper mill chest influent;
Figure 5 is a plot of VFA concentration versus time in a paper mill product.
Figure 6 is a plot of hydrogen concentration versus acetate concentration in a paper mill chest effluent;
Figure 7 is a plot of hydrogen concentration versus propionate concentration in a paper mill chest effluent;
Figure 8 is a plot of hydrogen concentration versus butyrate concentration in a paper mill chest effluent;
Figure 9 is a plot of acetate concentration versus time at varying initial hydrogen concentrations;
Figure 10 is a plot of propionate concentration versus time at varying initial hydrogen concentrations;
Figure 11 is a plot of butyrate concentration versus time at varying initial hydrogen concentrations; and
Figure 12 is a bar chart showing the percent of inhibition of VFA production for ten biocides at concentrations of 25, 62.5 and 100 ppm.
Figure 13 is a plot of dissolved hydrogen, acetate, butyrate and propionate concentration versus time in the absence and in the presence of nitrate in paper mill whitewater;
Figure 14 is a plot of propionate and butyrate concentration versus time in an aqueous anaerobic system, for a control without an electron acceptor and for an aqueous anaerobic system treated with sodium perborate;
Figure 15 is a plot of propionate and butyrate concentration versus time in an aqueous anaerobic system, for a control without an electron acceptor and for an aqueous anaerobic system treated with sodium percarbonate;
Figure 16 is a plot of propionate and butyrate concentration versus time in an aqueous anaerobic system, for a control without an electron acceptor and for an aqueous anaerobic system treated with sodium (para) periodate;
Figure 17 is a plot of propionate and butyrate concentration versus time in an aqueous anaerobic system, for a control without an electron acceptor and for an aqueous anaerobic system treated with sodium peroxide;
Figure 18 is a plot of propionate and butyrate concentration versus time in an aqueous anaerobic system, for a control without an electron acceptor and for an aqueous anaerobic system treated with peroxidosulphate;
Figure 19 is a plot of propionate and butyrate concentration versus time in an aqueous anaerobic system, for a control without an electron acceptor and for an aqueous anaerobic system treated with sodium permanganate;
Figure 20 is a plot of propionate and butyrate concentration versus time in an aqueous anaerobic system, for a control without an electron acceptor and for an aqueous anaerobic system treated with sodium nitrate;
Figure 21 is a plot of propionate and butyrate concentration versus time in an aqueous anaerobic system, for a control without an electron acceptor and for an aqueous anaerobic system treated with ammonium nitrate;
Figure 22 is a plot of propionate and butyrate concentration versus time in an aqueous anaerobic system, for a control without an electron acceptor and for an aqueous anaerobic system treated with cupric oxide.
Figure 23 is a plot of propionate and butyrate concentration versus time in an aqueous anaerobic system, for a control without an electron acceptor and for an aqueous anaerobic system treated with ferric oxide
Figure 24 is a plot of propionate and butyrate concentration versus time in an aqueous anaerobic system for a control without an electron acceptor and for an aqueous anaerobic system treated with sodium sulfate;
Figure 25 is a plot of hydrogen, acetate, propionate and butyrate concentration versus time for an aqueous anaerobic system not treated with an electron acceptor;
Figure 26 is a plot of hydrogen, acetate, propionate and butyrate concentration versus time for an aqueous anaerobic system treated with a biocide mixture;
Figure 27 is a plot of hydrogen, acetate, propionate and butyrate concentration versus time for an aqueous anaerobic system treated with nitrate;
Figure 28 is a plot of hydrogen, acetate, propionate and butyrate concentration versus time for an aqueous anaerobic system treated with percarbonate; and
Figure 29 is a plot of hydrogen, acetate, propionate and butyrate concentration versus time for an aqueous anaerobic system treated with perborate.

### DETAILED DESCRIPTION OF THE INVENTION

In accordance with the present invention a method for inhibiting the production and accumulation of volatile fatty acid in an aqueous anaerobic pulp and paper processing environment by hydrolytic-fermentative bacteria is provided. The present inventors have discovered that production of propionic acid and butyric acid are preceded by an increase in hydrogen concentration in an anaerobic aqueous environment. Therefore, a method comprising the steps of:
a) identifying the presence of hydrogen in an environment, and
b) treating the environment in which hydrogen is identified with a biocide,
effectively inhibits hydrogen and volatile fatty acid production by bacteria in an environment.

The exact bacteria and the mechanisms by which hydrogen production precedes VFA production is not entirely clear. However, the inventors believe that the paper manufacturing process in which mill water is sequentially aerated and deaerated inhibits the growth of obligate aerobes and anaerobes while fostering the growth of facultative anaerobes. The result is that hydrolytic-fermentative bacteria growth is promoted while syntrophic acetogenic and methanogenic bacterial growth is inhibited. The facultative hydrolytic fermentative bacteria thus produce more hydrogen than the surviving methanogens can utilize resulting in a build-up of hydrogen. When a threshold level of hydrogen is reached, the thermodynamics of the chemical reactions in the anaerobic environment favors VFA production. The threshold concentration of hydrogen favoring VFA production is about 10 ppb (parts per billion). Therefore, by monitoring for hydrogen in concentrations of 10 ppb or greater in anaerobic portions of the paper mill, the production of VFA's can be anticipated and inhibited by treating the affected portion of the mill with a biocide. An additional benefit of this method is that by monitoring for hydrogen, explosion hazards associated with hydrogen gas build-up are easily avoided since hydrogen producing bacteria growth is inhibited by treatment with biocide long before evolved hydrogen gas concentration reaches explosive levels.

Monitoring for hydrogen can be done intermittently with biocide applied as needed, in the anaerobic portions of a pulp and paper processing stream or hydrogen monitoring can be continuous with automatic biocide application when hydrogen concentration is detected at predetermined levels. The preferred hydrogen monitoring means is an electrochemical fuel cell hydrogen monitor. Such monitors include Hydran® 202N monitors available commercially from Syprotec, Inc.

The present inventors have also discovered that the formation of hydrolytic-fermentative metabolic products is inhibited by the presence in an anaerobic environment of a material which accepts biochemical mineralization product electrons, termed herein an electron acceptor. Therefore, a method comprising adding an electron acceptor to an anaerobic environment effectively inhibits hydrogen and volatile fatty acid production by bacteria in the environment. The method has particular utility in pulp and paper mills.

In an anaerobic environment which has been sequentially aerated and deaerated, and in which hydrolytic-fermentative bacteria are thriving, when a threshold level of hydrogen is reached, the thermodynamics of the chemical reactions in the anaerobic environment favors VFA production, and hydrogen and VFA's which are normally transient intermediates in the anaerobic chain accumulate in the disturbed system. Under aerobic conditions, oxygen is utilized as a terminal electron acceptor during the mineralization process allowing bacteria to successfully mineralize complex organic molecules to CO₂ and H₂O without the aid of bacteria from other trophic groups. The inventors have discovered that if an electron acceptor is added to an anaerobic environment containing faculative hydrolytic fermentative bacteria, the electron acceptor accepts electrons which result from organic molecule mineralization in much the same way that oxygen does under aerobic conditions. Thus, electrons from mineralization are used for electron acceptor reduction instead of for VFA and hydrogen formation.

Effective electron acceptors include moieties which are oxidizing agents such as perborates, sulfates, nitrates, permanganates, periodates, peroxides, percarbonates and oxides.

The preferred electron acceptors are alkali metal nitrates, perborates, peroxidosulphates, permanganates, (para) periodates, peroxides, percarbonates, sulfates and ammonium nitrates.

The most preferred electron acceptors are those electron acceptors which inhibit anaerobic bacterial metabolic product formation and yet are not effective biocides (i e., are non-biocidal) such as alkali metal perborate, nitrate, and percarbonate, as well as ammonium nitrate.

The amount of electron acceptor added to a system will depend on the anaerobic system to be treated. Factors such as temperature, pH, the amount of bacteria present, the amount of organic material present and the like will all influence H₂ and VFA production and thus will influence the amount of electron acceptor required to inhibit H₂ and VFA production. In general, dosages of from a trace up to about 10,000 parts per million (ppm) of the electron acceptor in the treated system are expected to be effective in controlling H₂ and VFA production in an anaerobic environment. The preferred electron acceptor concentration is from about 1 ppm to about 7 500 ppm and the most preferred concentration is from about 1 ppm to about 5,000 ppm.

An electron acceptor can be added to any portion of a paper mill at or upstream of sites of typical VFA production such as paper mill storage chests on either an intermittent or a continuous basis. An electron acceptor can also be added in locations where hydrogen monitoring of an anaerobic environment indicates the presence of VFA producing bacteria

The efficacy of the present invention will now be shown by the following examples. The examples are included as being illustrations of the invention and should not be construed as limiting the scope thereof

### Example I

A reactor was constructed with an on-line pH and temperature controller and a fuel-cell mediated hydrogen monitor. Sterile anaerobic growth medium was pumped into the reactor and inoculated with 50 ml of white water from a VFA-laden paper mill. The reactor was operated in batch mode at pH 7.0 and a temperature of 48 to 50°C. In addition to the continuous monitoring of hydrogen concentration in the reactor, samples were collected at regular intervals for the analysis of glucose, cellobiose xylose, and arabinose which were the carbon sources supplied with the medium, and VFA's, the products of the anaerobic metabolism of the sugars. The optical density of the medium was measured at regular intervals to monitor growth of the microorganisms.

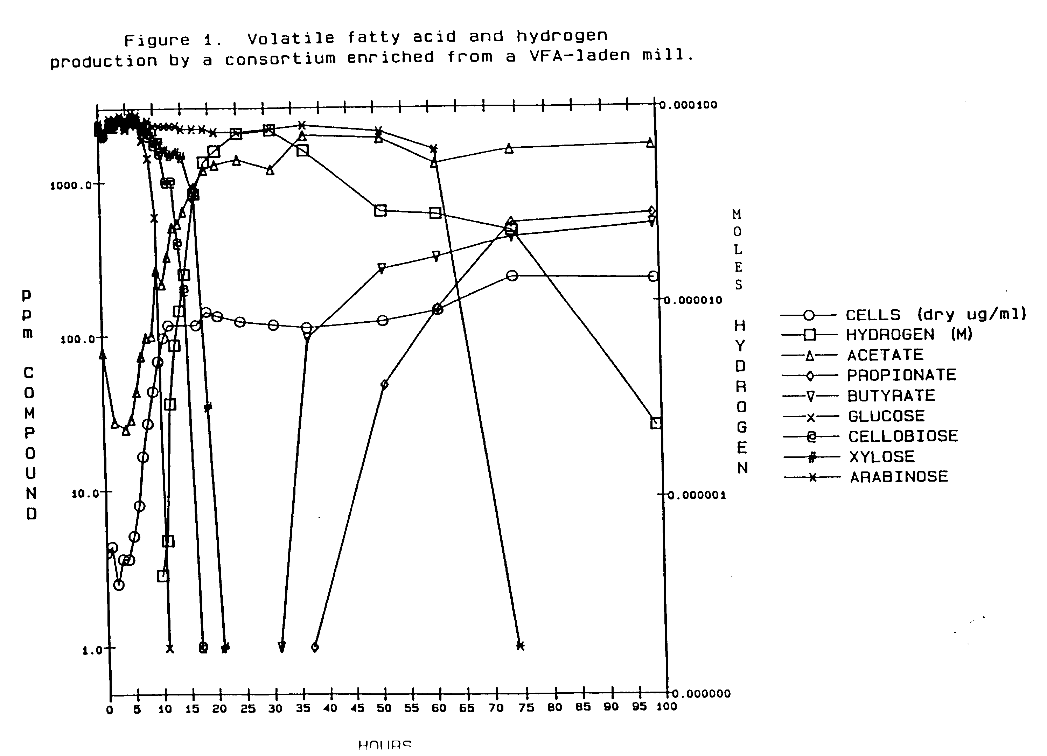

Acetic acid was produced concomitantly with hydrogen, as the culture grew exponentially as shown in Figure 1. Hydrogen concentration reached a maximum about 6 hours before the initiation of butyric acid production, and about 15 hours before the appearance of propionic acid in the medium.

### Example II

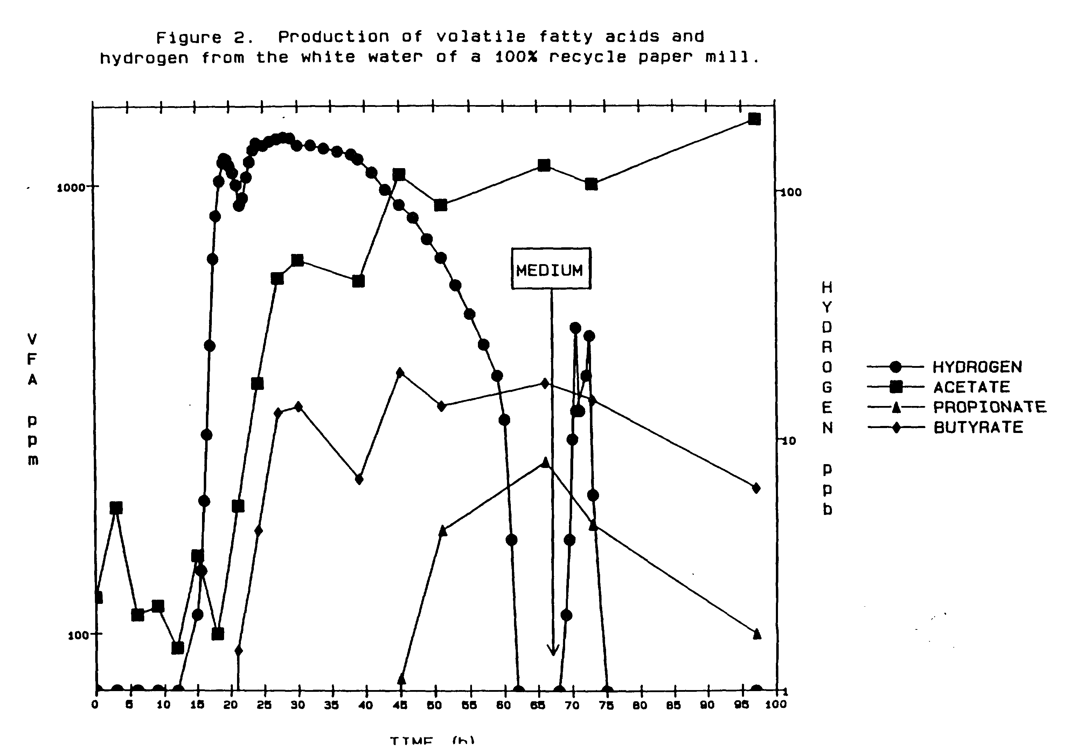

A reactor as described in Example I was charged with white water from a 100% recycle paper mill amended with anaerobic growth medium (10% volume/volume) and subjected to anaerobic condition. Hydrogen concentration was continuously monitored. Samples were collected at regular intervals for the analysis of acetate, propionate and butyrate. The concentrations of VFA's and hydrogen produced over time are shown in Figure 2. Hydrogen concentrations reached a maximum 4 to 6 hours before butyric acid production and about 20 hours before propionic acid production. A second charge of anaerobic growth medium (10% volume/volume) was added after the hour 65 resulting in the hydrogen peaks between 70 and 75 hours.

### Example III

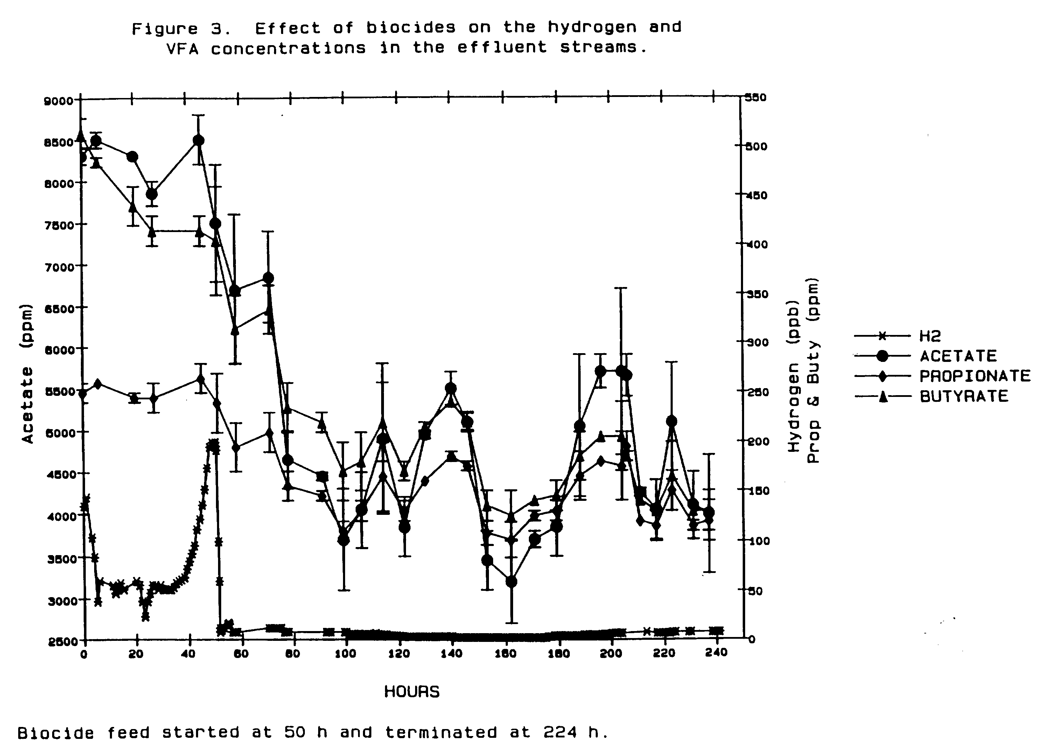

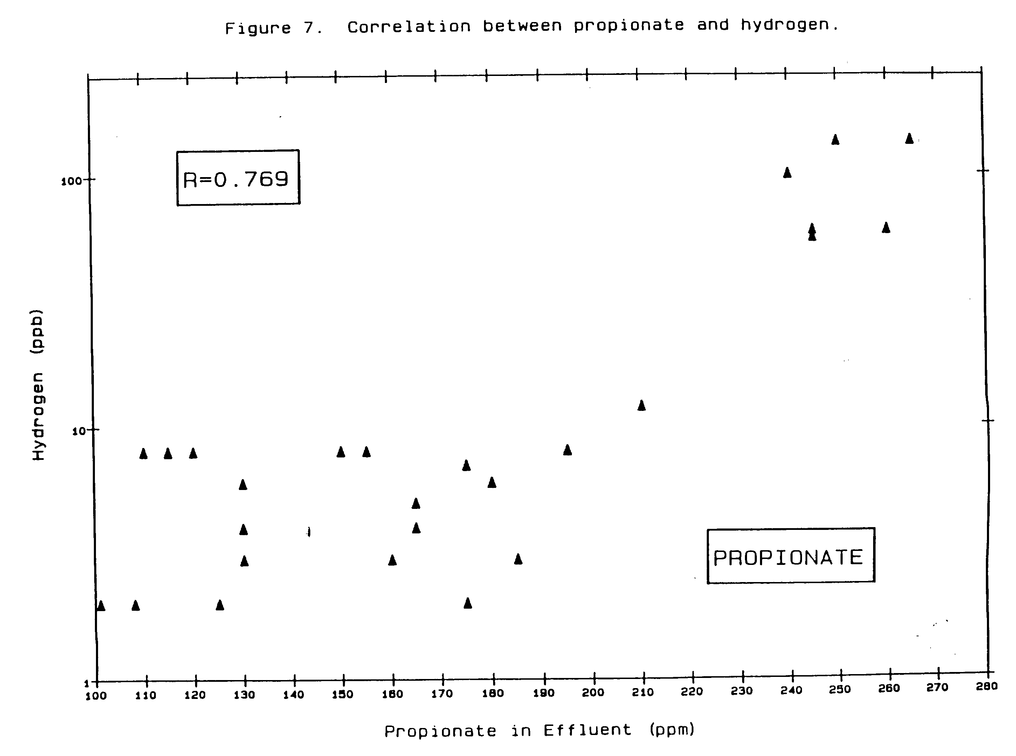

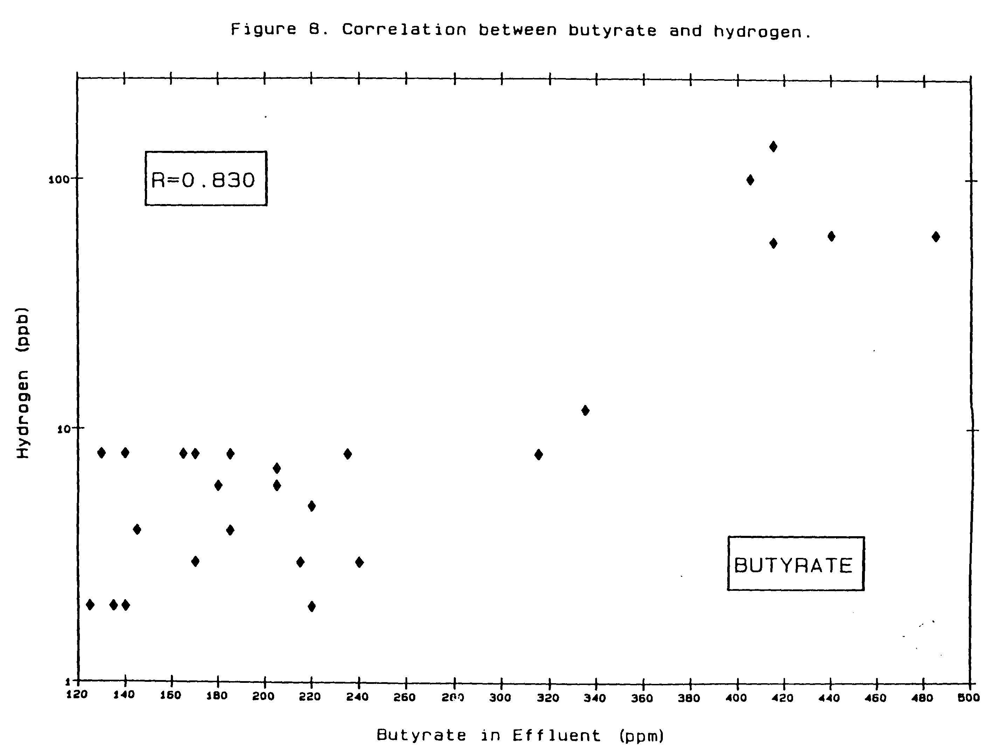

A commercial paper mill was experiencing problems with VFA content in it's product. A 250,000 gallon chest was found to have elevated hydrogen levels of about 150 ppb. Hydrogen concentration was monitored continuously in the influent and effluent streams. VFA concentrations were monitored in the influent, effluent and finished paper. A biocide consisting of a mixture of biocides A and D, both available commercially from Betz Laboratories, Inc., was fed to the chest through the influent pipe at a rate sufficient to maintain concentrations of 75 ppm and 25 ppm respectively in the influent stream. The biocide treatment was started 50 hours after hydrogen monitoring began and ended at about 220 hours. The results are shown in Figures 3-8.

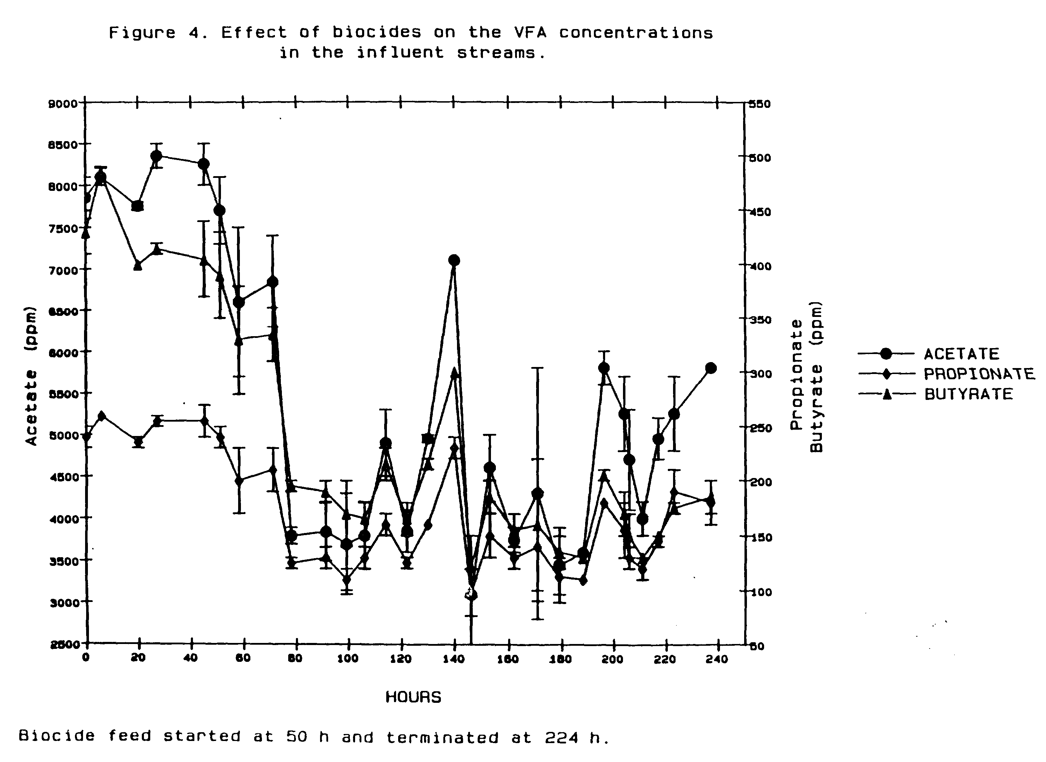

Figure 3 is a plot of hydrogen, acetate, propionate and butyrate concentration versus time in the effluent stream. Hydrogen was monitored from the beginning of the test until about 244 hours (i.e., 24 hours after the biocide injection was stopped). As shown in Figure 3, hydrogen concentration declined from greater than 200 ppb to about 8 ppb within one hour of the biocide injection. VFA concentration declined to about 60% - 70% of the starting concentration within about 24 hours after biocide addition. The VFA concentration increases at about 120-140 hours and 180-200 hours was due to an elevated concentration of VFA's in the incoming pulp (see Figure 4 discussed herein below).

Figure 4 is a plot of acetate, propionate and butyrate concentration versus time in the influent stream. The VFA concentration peaks at about 120-150 hours and 180-200 hours followed the same pattern as the effluent samples shown in Figure 3.

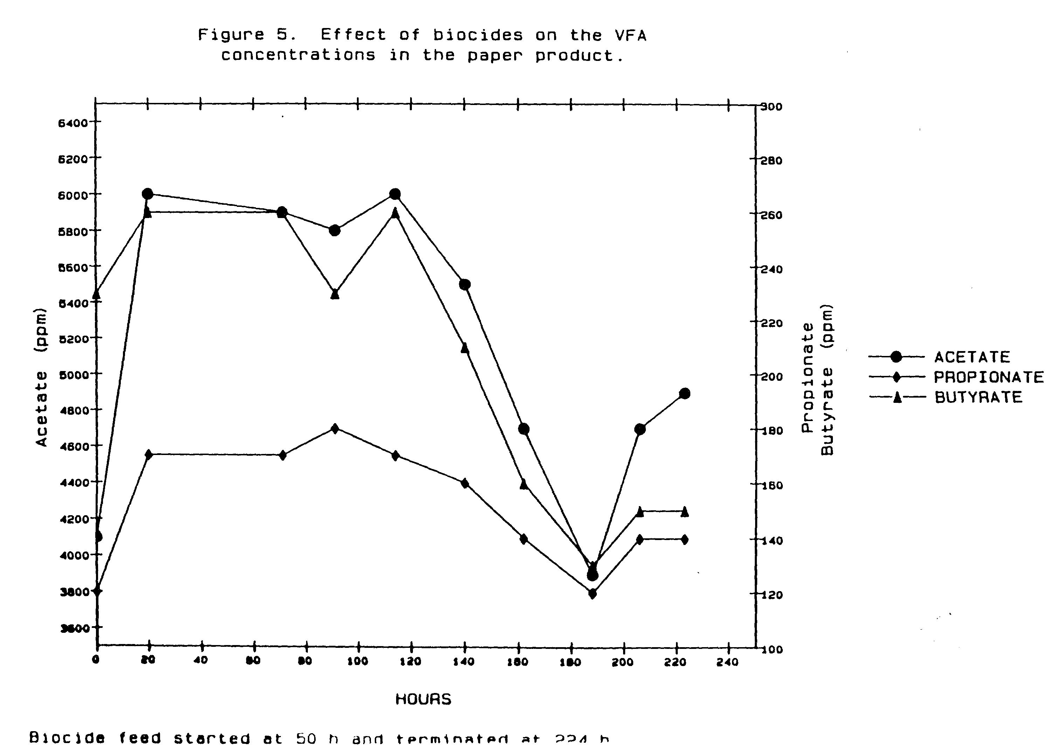

Figure 5 is a plot of VFA concentration versus time in the finished paper product. VFA concentrations declined by about 30% - 50% after about 120 hours (about 70 hours after the biocide was administered).

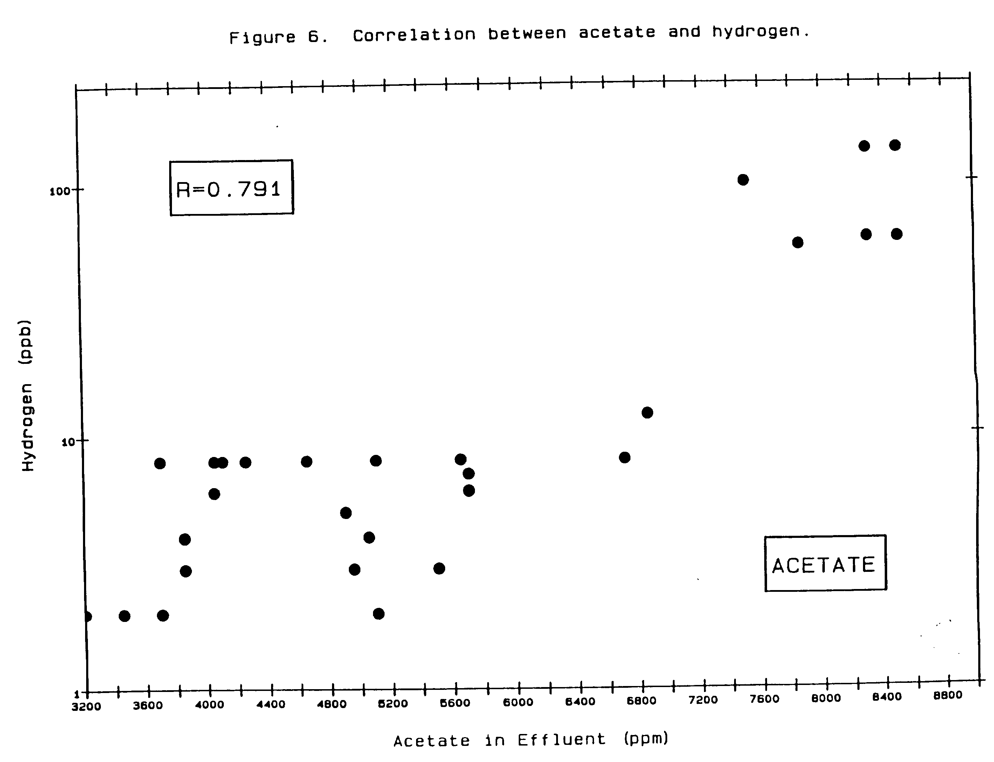

Figures 6-8 are scatter plots of VFA concentrations versus hydrogen concentration. The figures show that above 10 ppb of hydrogen concentration, VFA concentration is markedly increased within an aqueous solution containing VFA producing anaerobes.

### Example IV

The head spaces of serum bottles containing anaerobic nutrient media inoculated with mill water containing bacteria were filled with varying amounts of gaseous hydrogen. Samples of the mill water were collected and analyzed for VFA concentration.

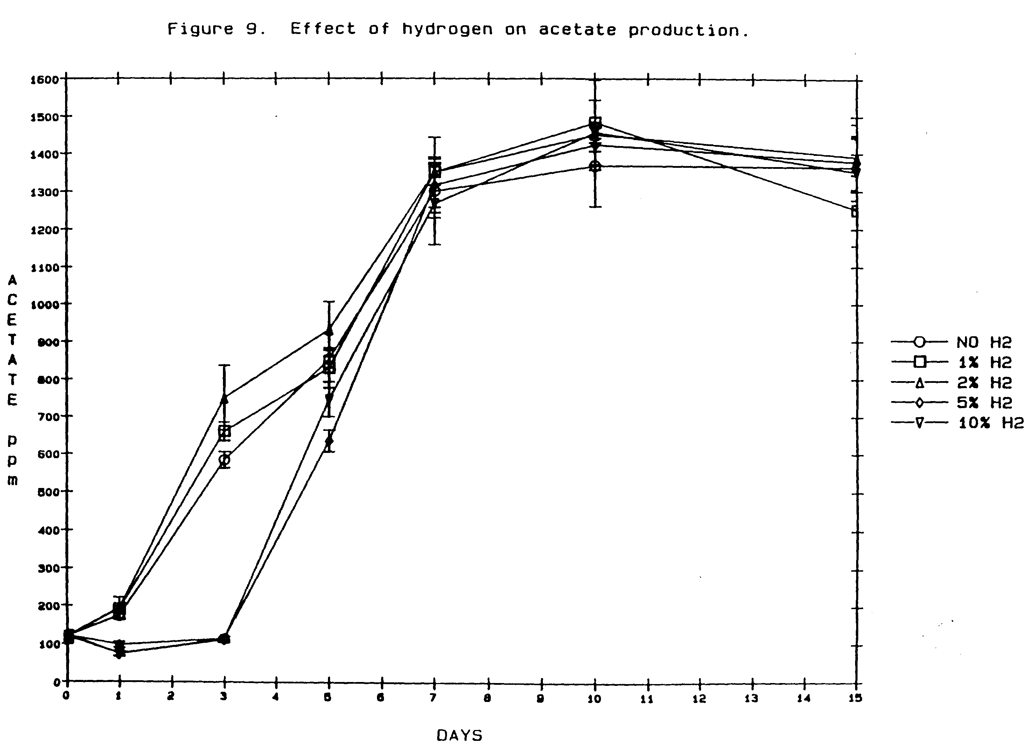

Figure 9 shows that initial acetate production was favored by bacteria in the absence of or at low concentrations of hydrogen.

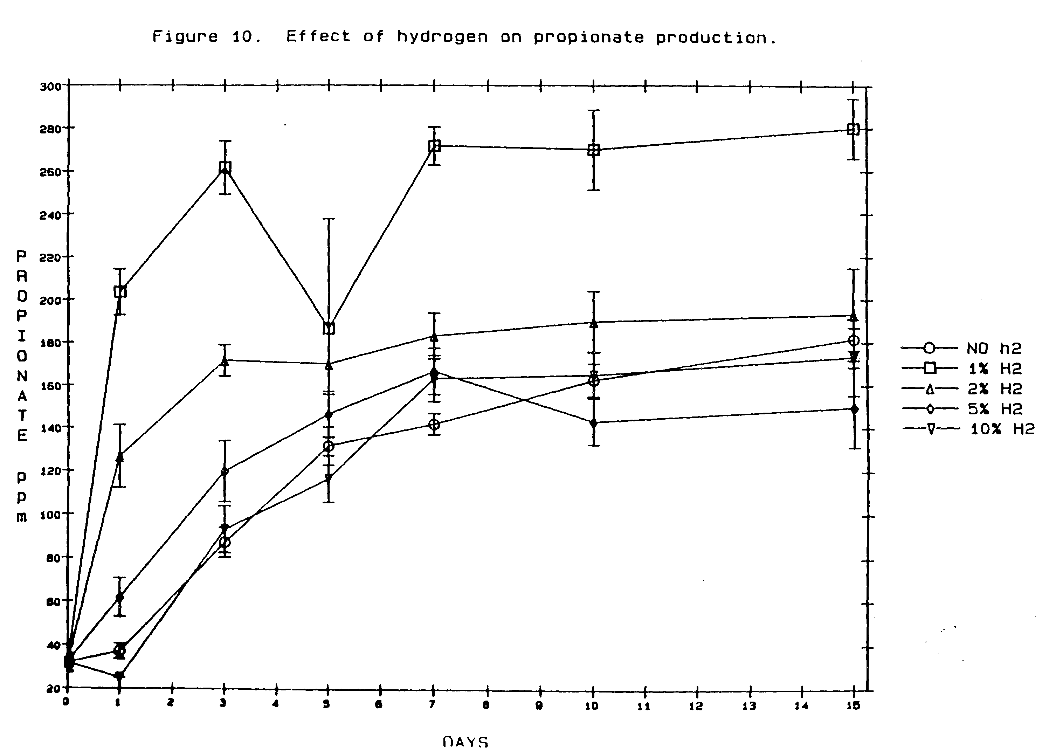

Figure 10 shows initial propionate production was favored by bacteria at low hydrogen concentrations.

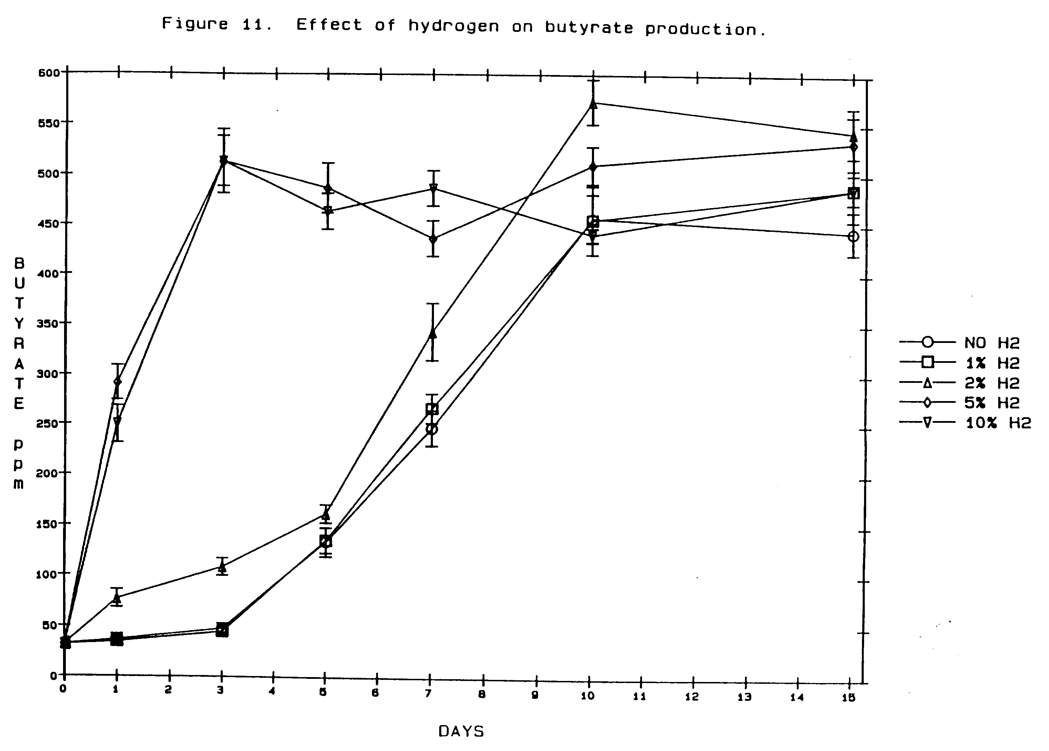

Figure 11 shows initial butyrate production was favored by bacteria at high hydrogen concentrations.

It is important to note that the conditions of 0% hydrogen, 1%, 2%, 5% and 10% hydrogen were initial hydrogen concentrations, in the head spaces of the serum bottles. The concentration of hydrogen within the sample bottles could not be maintained at a constant concentration throughout the test. Hydrogen accumulated within the bottles as the test progressed due to bacterial metabolism within the serum bottles. The accumulated hydrogen caused high VFA concentrations during the later days of the test.

As shown in Figures 1-11, hydrogen provides an excellent indicator of the presence of hydrolytic-fermentative bacteria in an anaerobic environment and is the preferred indicator in this invention. Also shown in Figures 1-11 is that acetate production precedes propionate and butyrate production. Thus, acetate can be used to predict the production of propionate and butyrate in an anaerobic environment containing hydrolytic-fermentative bacteria and, by monitoring for acetate in an environment and treating the environment with a biocide, the production of propionate and butyrate can be inhibited.

### Example V

Thirty serum bottles were filled with media and VFA producing bacteria. One glutaraldehyde biocide available commercially from Fisher Scientific (GLUT), and nine biocides (A-I) available commercially from Betz Laboratories, Inc. were tested at concentrations of 25 ppm, 62.5 ppm and 100 ppm to demonstrate that VFA production could be inhibited by biocidal treatment. The biocide types are shown in Table I below.

**TABLE I**

| Biocide | Type of Active Ingredient |
|---|---|
| A | Halogenated alkyl sulfone, fatty ester of alkoxylated polyhydric alcohol and methylene bis(thiocyanate). |
| B | Halogenated nitro styrene, fatty ester of alkoxylated polyhydric alcohol and methylene bis(thiocyanate). |
| C | Halogenated nitro styrene. |
| D | Ammonium compound and quanidine hydrochloride. |
| E | Halogenated alkyl sulfone and halogenated nitro styrene. |
| F | Ammonium compound and halogenated alkyl sulfone. |
| G | Halogenated nitro propanediol and quanidine hydrochloride. |
| H | Ammonium compound and a halogenated nitro propanediol. |
| I | Halogenated alkyl sulfone, and alkyl benzyl ammonium chloride. |
| GLUT | Glutaraldehyde. |

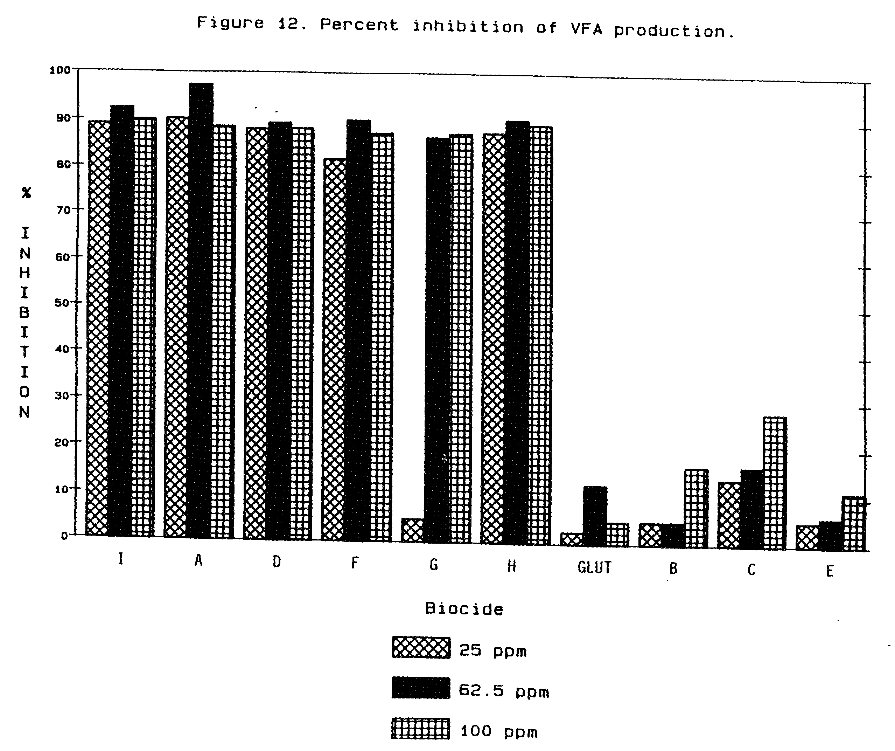

The results are shown in Figure 12. Figure 12 shows that biocidal treatment effectively inhibits VFA production.

Examples I-V demonstrate that hydrogen is particularly well suited as an indicator of the presence of bacteria which produce hydrolytic-fermentative metabolic products and that production of hydrolytic-fermentative bacteria metabolic products are effectively inhibited by biocidal treatment of the environment in which hydrogen is detected. The invention has particular applicability in the inhibition of bacteria in a paper mill system.

### Example VI

An experiment was conducted in a bioreactor, which was equipped with an automatic pH and temperature control device and an on-line H₂ monitor. The reactor was filled with 1 liter of white water collected from a paper mill. Glucose, xylose, arabinose, and cellobiose were added to a final concentration of each of 2.5 grams (g) per liter (I) along with a mixture of vitamins, trace metals, and mineral salts to enhance VFA production. The reactor was operated in batch mode anaerobically. H₂ was continuously monitored on-line with a Hydran® 202N electrochemical fuel cell hydrogen monitor available from Syprotec Inc. Samples were periodically collected during the reactor run to determine the VFA content

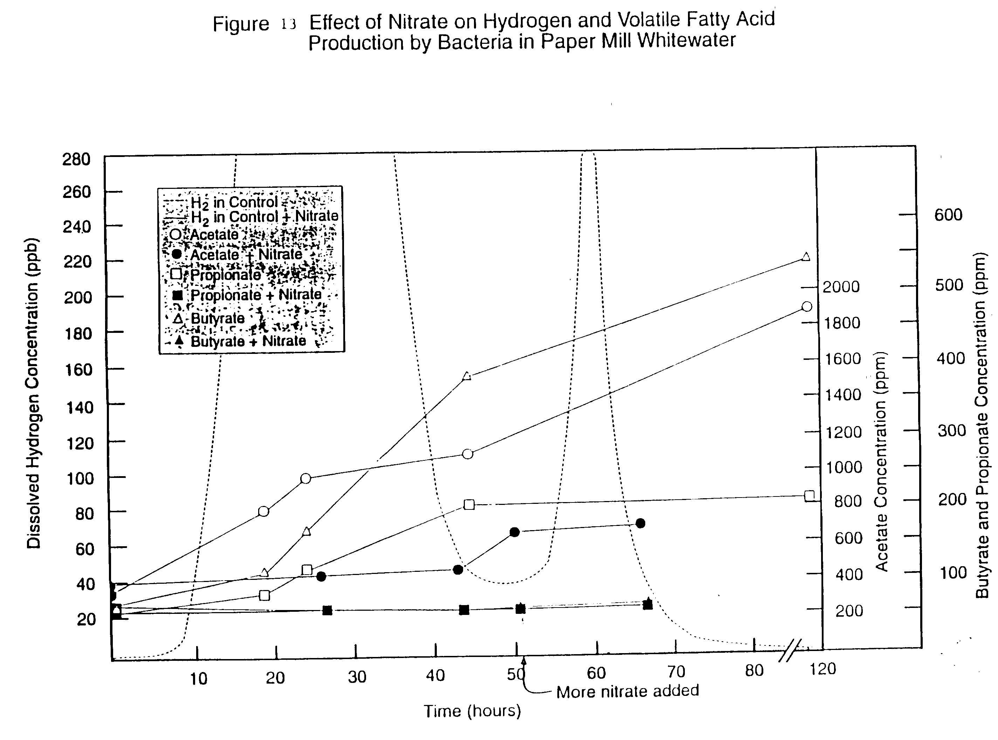

Without an electron acceptor, hydrogen production was initiated within 8 hours and reached its peak concentration within 13 hours (Figure 13). Beginning at 36 hours, the H₂ concentration declined to about 50 parts per billion (ppb) and stayed at that level until 53 hours, when the H₂ concentration began to increase again. At 60 hours the H₂ concentration reached its maximum and sharply declined during the next 10 hours. The two peaks in H₂ production are believed to be due to the preferential utilization of different carbohydrates, contained in the medium, by the VFA-producing community. Also shown in Figure 13 is that in the absence of an electron acceptor, acetate, propionate and butyrate concentrations increased over time.

### Example VII

To determine the effectiveness of sodium nitrate as an electron acceptor, 5 grams of sodium nitrate was added to a liter of anaerobic medium in the bioreactor system described in Example VI. No appreciable H₂ production was observed until after incubation for 48 hours (Figure 13). At the onset of H₂ production another dose of 5 grams of sodium nitrate was added to the reactor. Immediately following the addition of nitrate, H₂ concentration began to decline and reached the background levels within a few minutes.

There was no appreciable increase in acetate concentration in the reactor receiving nitrate until it had incubated for 42 hours. It is postulated that it took approximately 42 hours for the electron accepting capacity of the sodium nitrate to be exhausted. As a result, there was a slight increase in acetate concentration between 42 hours and 51 hours, during which time a slight increase in H₂ concentration was also observed. The addition of more nitrate to the reactor prevented any further increase in acetate concentration. Also shown in Figure 13 is that there was effectively a complete inhibition of butyrate and propionate production in the reactor amended with sodium nitrate.

Under aerobic conditions bacteria derive metabolic energy by oxidizing organic carbon with the subsequent reduction of oxygen. Thus, in the presence of oxygen, electrons from organic carbon are transferred to oxygen. In the absence of oxygen, if other inorganic electron acceptors are not available in the ecosystem, electrons are transferred to protons and organic intermediates of carbohydrate catabolism, resulting in the formation of H₂ gas and VFAs. The results of Examples VI and VII indicate that H₂ gas and VFA formation by bacteria in an anaerobic environment can be effectively inhibited by addition of an electron acceptor to the environment.

### Example VIII

In serum bottles, eleven treatment materials shown in Table II were added separately to determine their efficacy as electron acceptors in an anaerobic environment. Each material was added at a concentration of 1 gram of treatment per liter of aqueous solution. A blank run was also conducted in a serum bottle without a treatment.

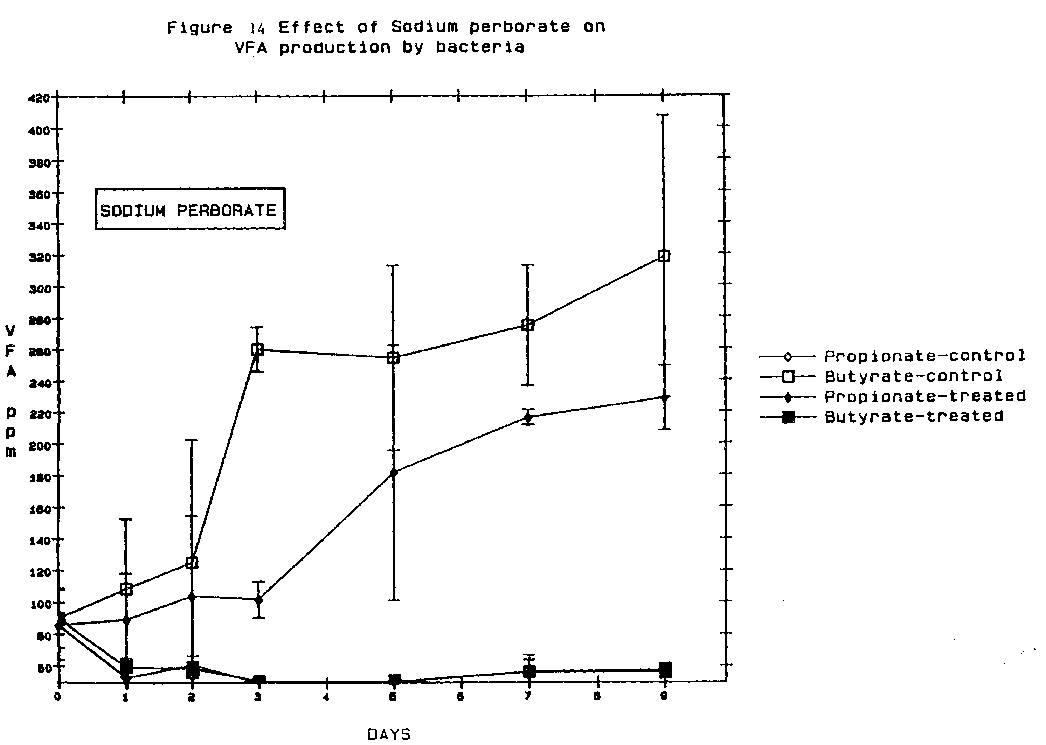

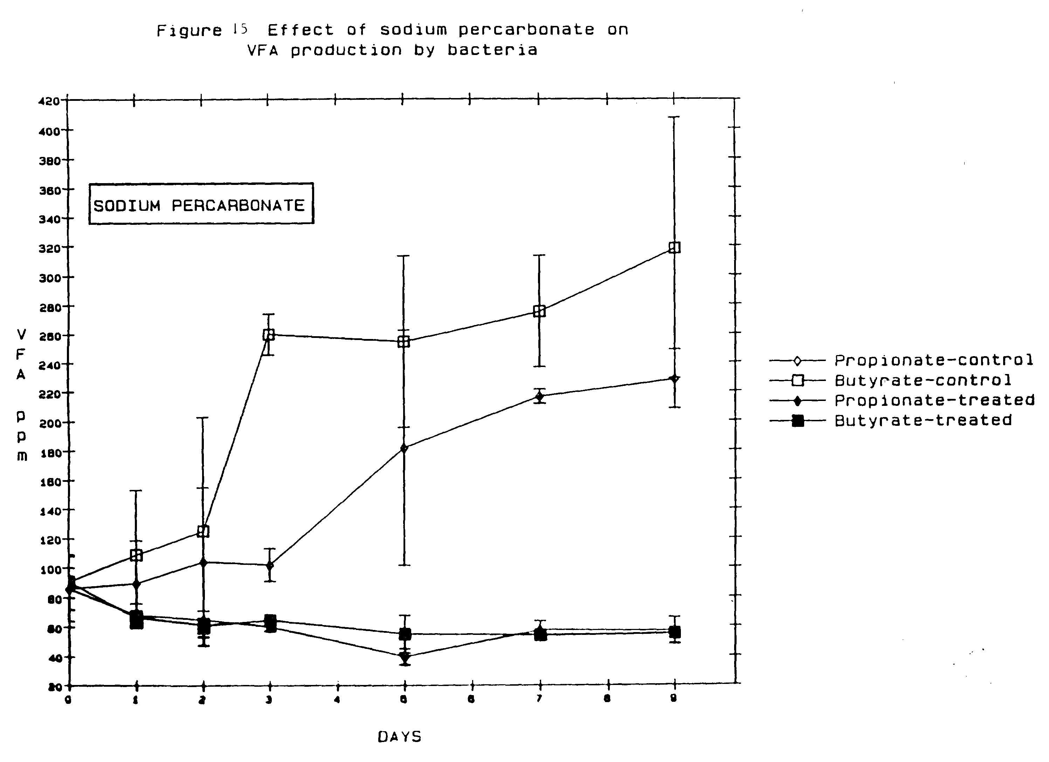

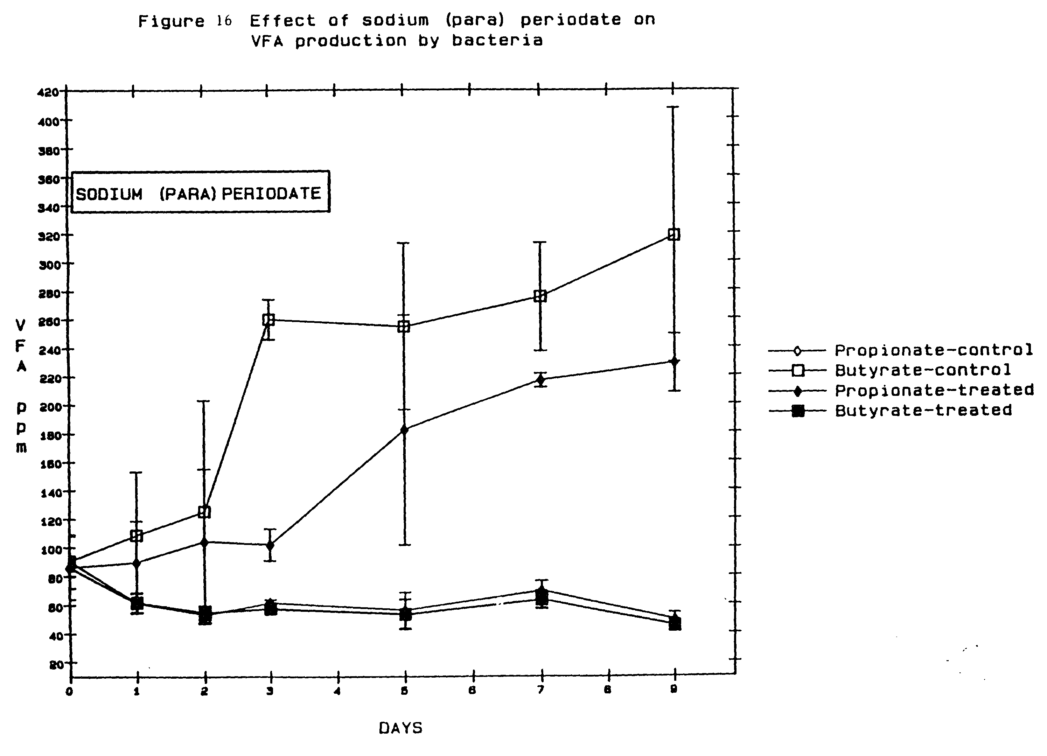

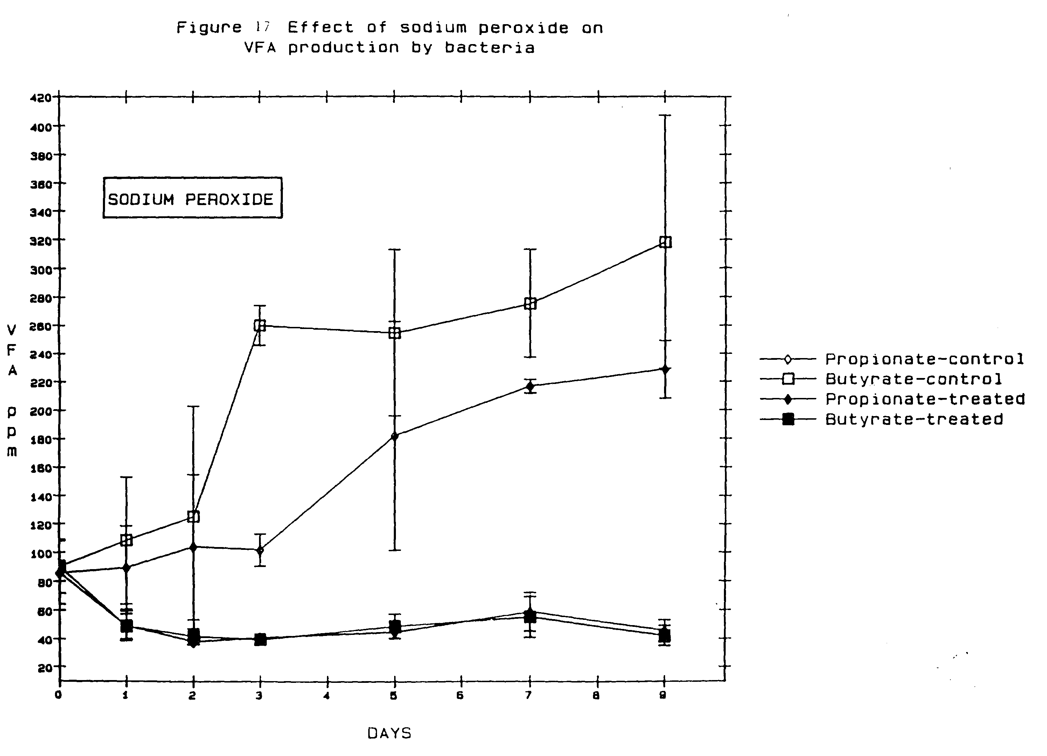

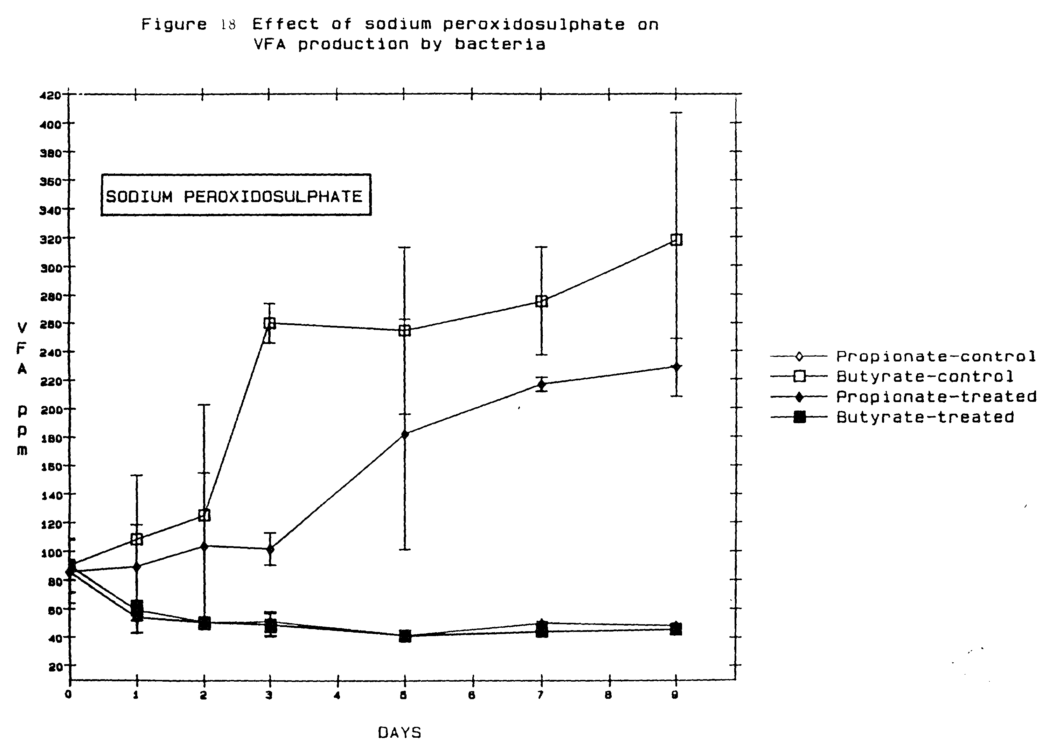

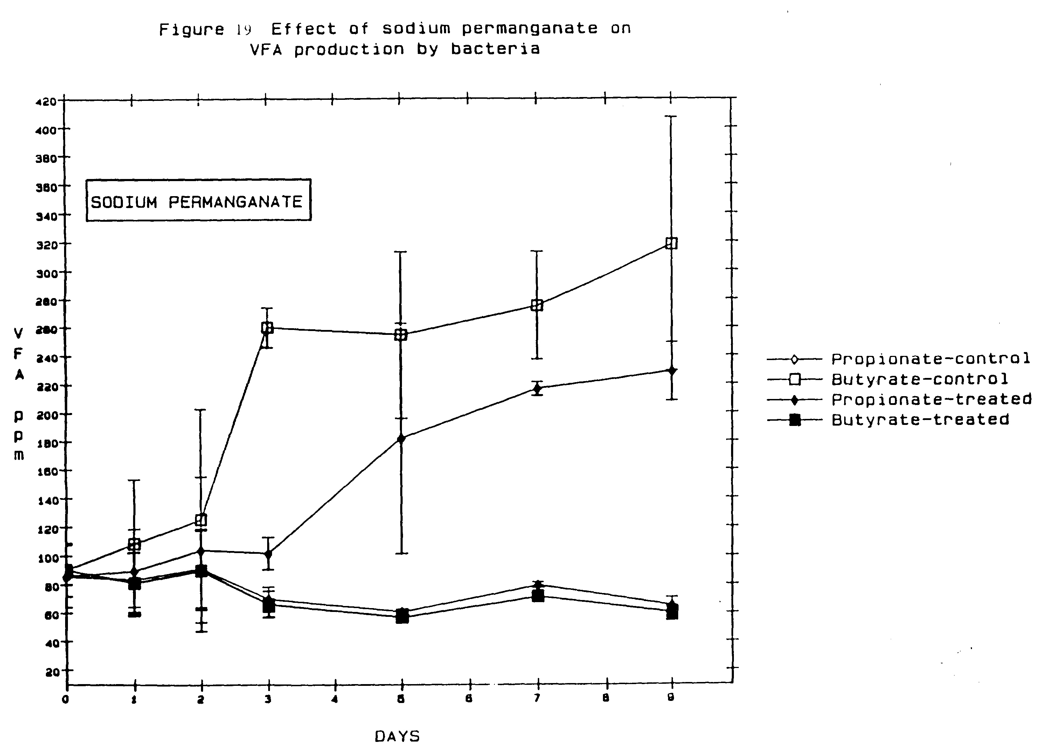

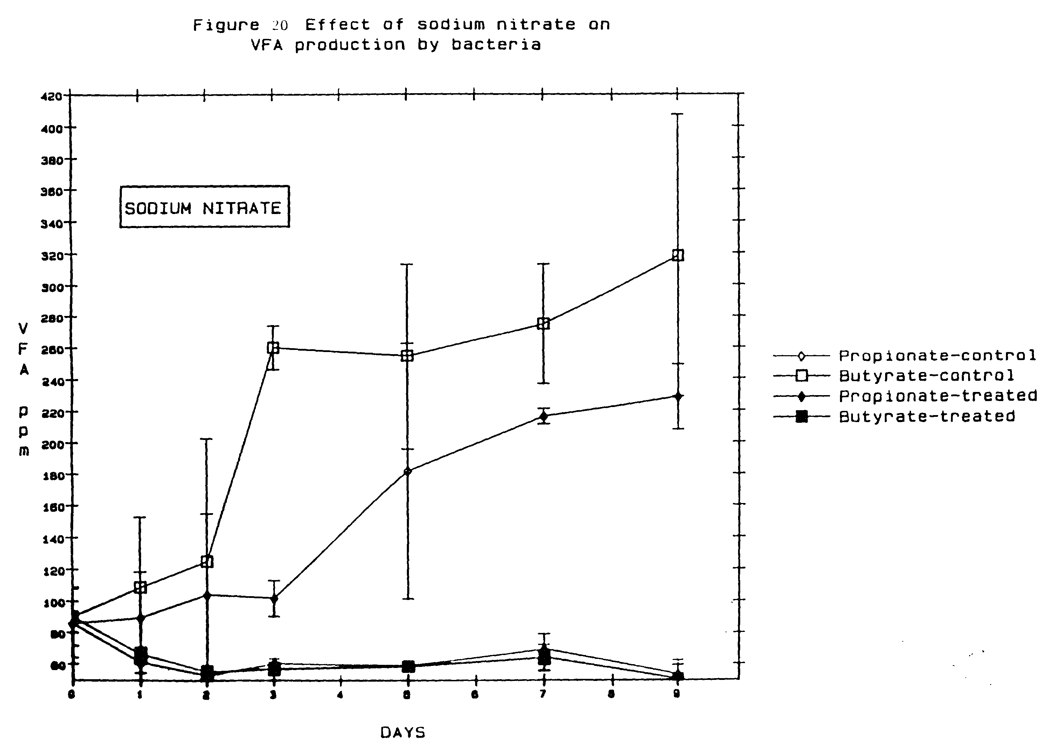

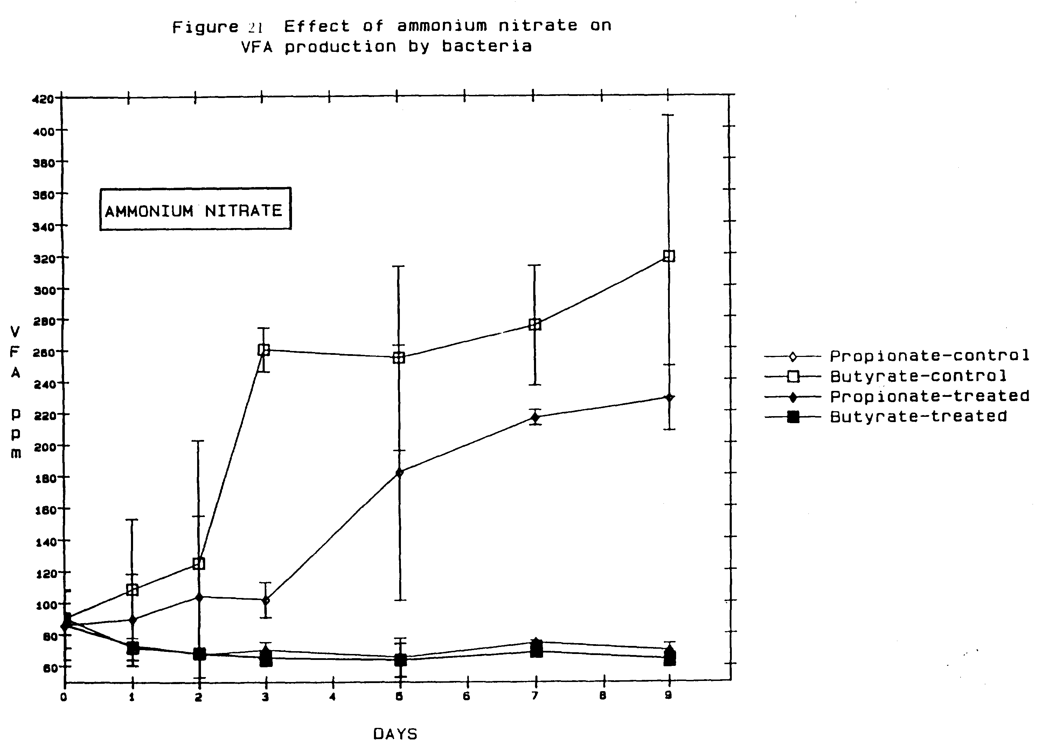

Samples were collected periodically to determine propionate and butyrate concentrations. The control run results are shown along with each of the treatment results in Figures 14-24.

**TABLE II**

| **Utilization of Sugars and VFA Production** | | | | | | |
|---|---|---|---|---|---|---|
| | % Inhibition | | % Remaining in the Medium on Day 9 | | | |
| Treatment | Propionate | Butyrate | Glucose | Xylose | Cellobiose | Arabinose |
| Control | *** | *** | BD** | BD | BD | BD |
| Sodium Perborate | 100.00 | 100.00 | BD | BD | BD | 100.00 |
| Sodium Peroxidosulphate | 100.00 | 100.00 | 94.30 | 100.00 | 97.00 | 87.00 |
| Cupric Oxide | 100.00 | 67.90 | 16.00 | 77.60 | 68.60 | 92.00 |
| Ferric Oxide | 0.00 | 0.00 | BD | 18.00 | 16.00 | 15.00 |
| Sodium Nitrate | 100.00 | 100.00 | BD | 79.00 | 100.00 | 100.00 |
| Ammonium Nitrate | 100.00 | 100.00 | BD | 76.30 | 100.00 | 87.60 |
| Sodium Permanganate | 96.30 | 100.00 | 66.60 | 62.00 | 100.00 | 70.60 |
| Sodium (Para) Periodate | 100.00 | 100.00 | 66.30 | 81.00 | 100.00 | 80.30 |
| Sodium peroxide | 100.00 | 100.00 | 58.00 | 22.00 | 100.00 | 34.00 |
| Sodium Percarbonate | 100.00 | 100.00 | BD | BD | BD | 26.30 |
| Sodium sulfate | 0.00 | 51.00 | BD | BD | BD | BD |

| | | | | | | |
|---|---|---|---|---|---|---|
| **BD = below detection limits | | | | | | |

Figures 14-21 show that sodium perborate, sodium percarbonate, sodium (para) periodate, sodium peroxide, sodium peroxidosulphate, sodium permanganate, sodium nitrate, and ammonium nitrate are effective electron acceptors which inhibit propionate and butyrate production in an anaerobic environment.

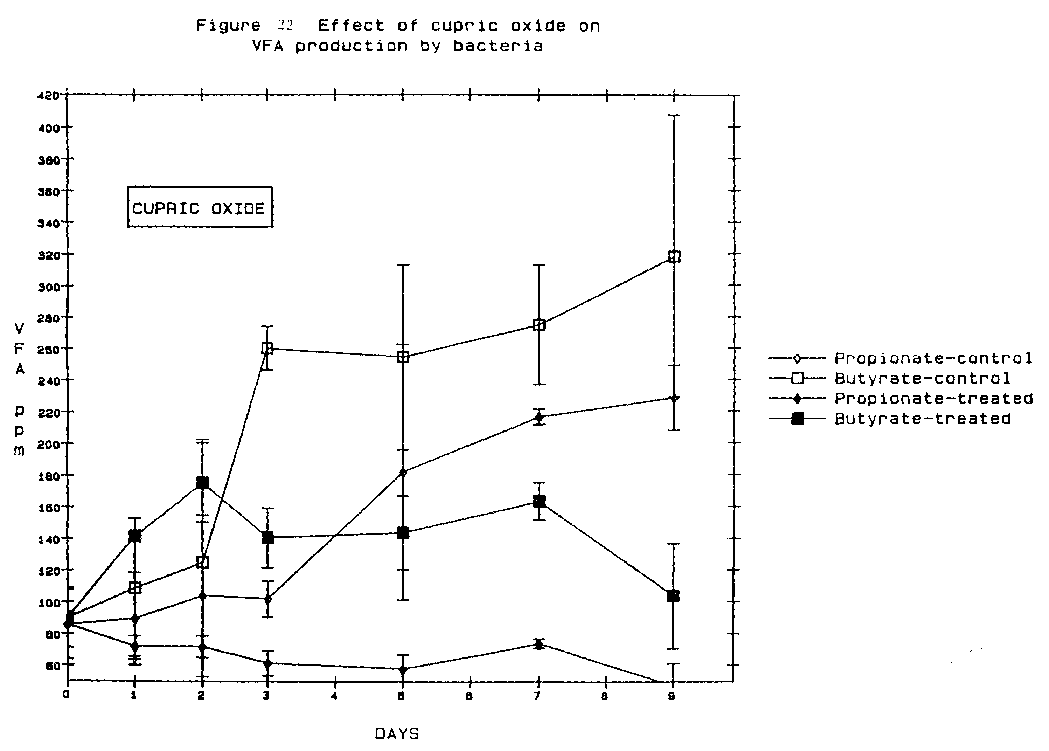

Figure 22 shows that cupric oxide was effective as a propionate inhibitor but was not as effective at butyrate inhibition.

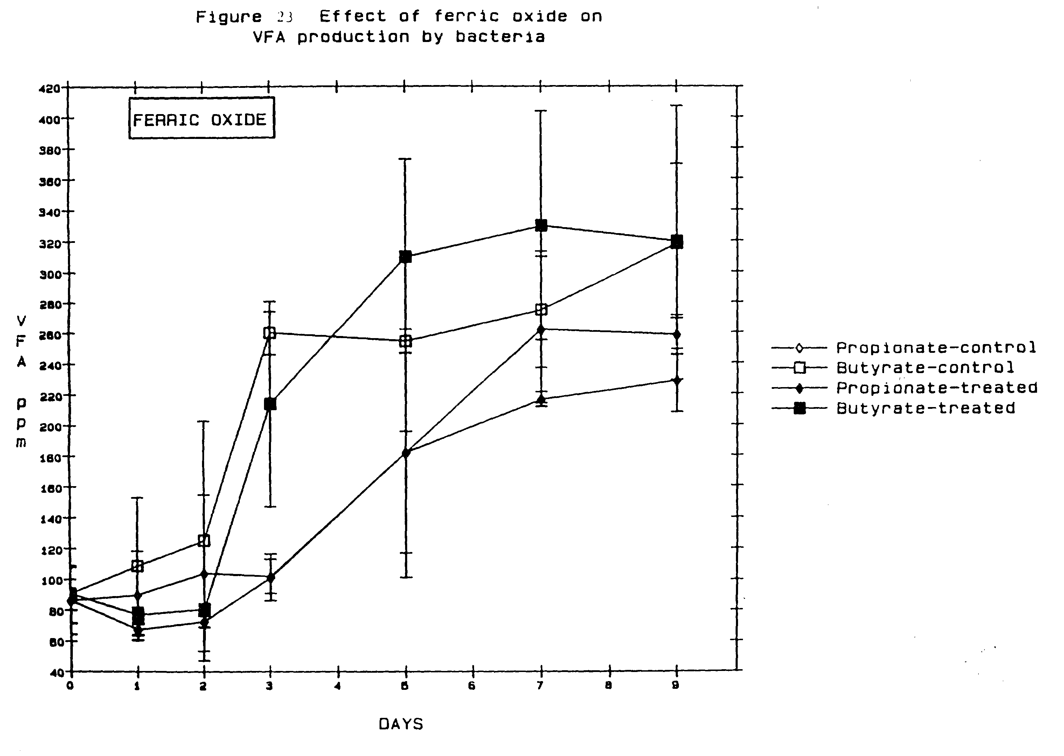

Figure 23 shows that ferric oxide was not effective as a propionate inhibitor nor as a butyrate inhibitor.

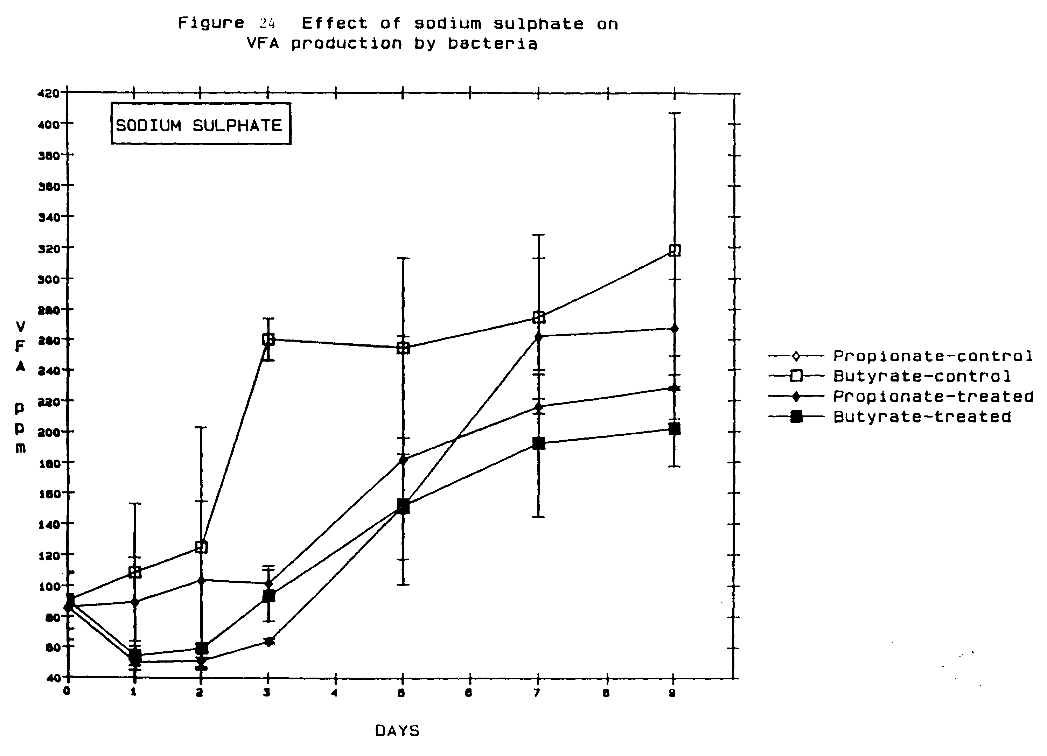

Figure 24 shows that sodium sulfate inhibited butyrate production but not propionate production.

The remaining sugar concentrations were measured at the end of each experiment. The percentage of sugar remaining in each sample is shown in Table II. The remaining sugar percentages indicate the activity of the microorganisms in each sample after addition of the electron acceptor. If an electron acceptor exhibited biocidal activity the remaining sugar percentages would be high, indicating that the electron acceptor killed the microorganisms in the treated sample. If an electron acceptor did not exhibit biocidal activity the remaining sugar percentage would be low, indicating that the microorganisms thrived after addition of the electron acceptor.

Table II shows that sodium peroxidosulphate had the highest remaining sugar percentages and thus had the most biocidal effect on the microorganisms in the sample media. Sodium permanganate, sodium (para) periodate and sodium peroxide appeared to exhibit some inhibition of the microorganisms in the sample media while sodium percarbonate. cupric oxide, sodium nitrate, ammonium nitrate and sodium perborate did not appear to exhibit biocidal activity.

### Example VIII

Five stock chests were filled with 4000 liters each of recycled container pulp board (1.5% consistency). The pulp contained 2 grams of starch per liter. Each chest was inoculated with 200 liters of culture that was previously grown in recycled pulp containing starch. The temperature of the stock chests were maintained at 45°C. All chests received sucrose (1 gram/liter) after sixty-four hours of incubation. The chests were monitored with on-line electrochemical fuel cell hydrogen monitors available commercially from Syprotec Inc. as in Example VI.

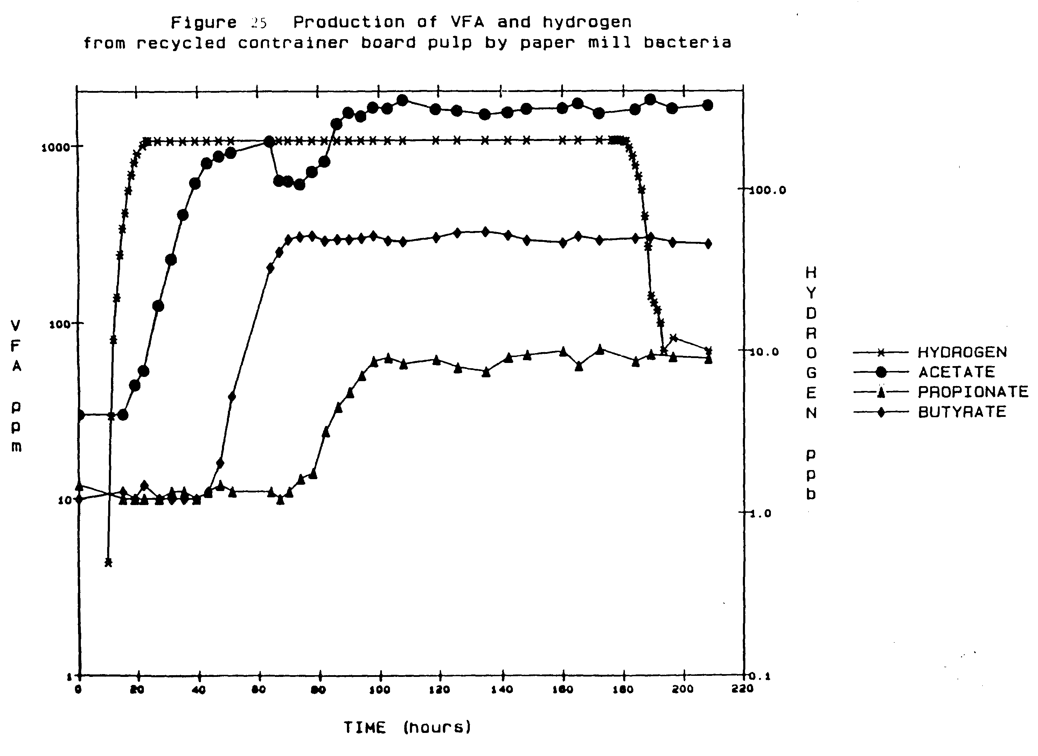

Figure 25 shows the concentrations of hydrogen and VFA's in the untreated control chest. As demonstrated in the previous examples, hydrogen and acetate were produced earlier than butyrate and propionate

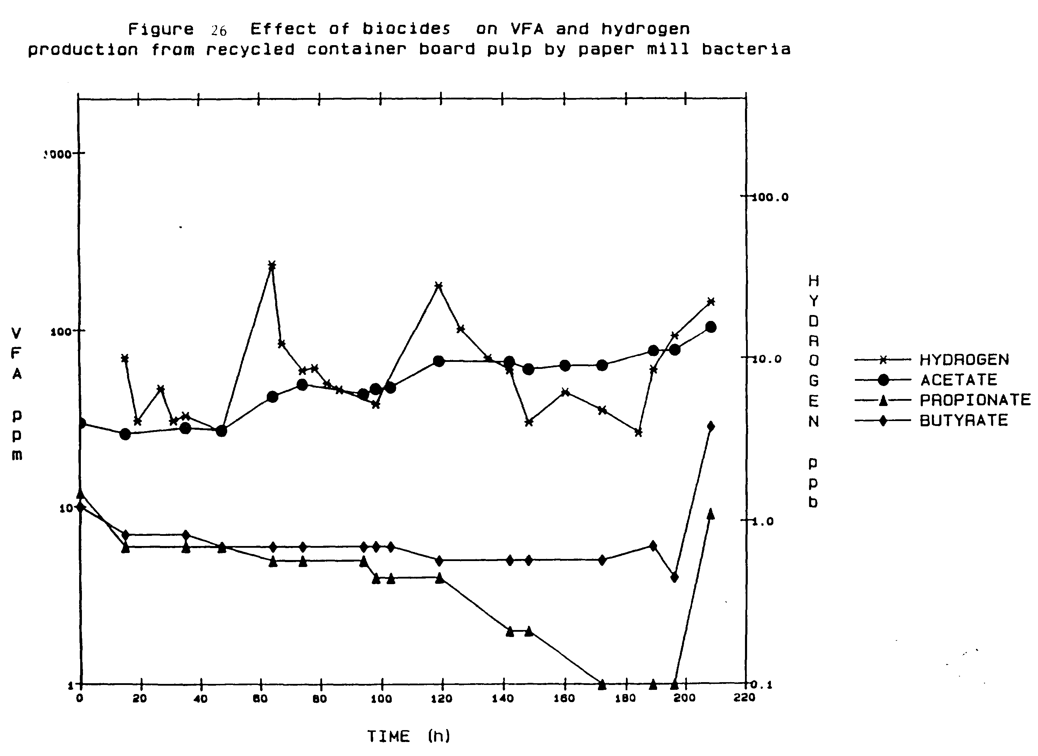

The data in Figure 26 is from a chest treated with 100 ppm of a mixture of commercially available biocides. The biocides were added at 15 hours, 60 hours and 120 hours when hydrogen concentrations began to increase. As shown in Figure 14, the biocide addition effectively inhibited hydrogen and VFA production.

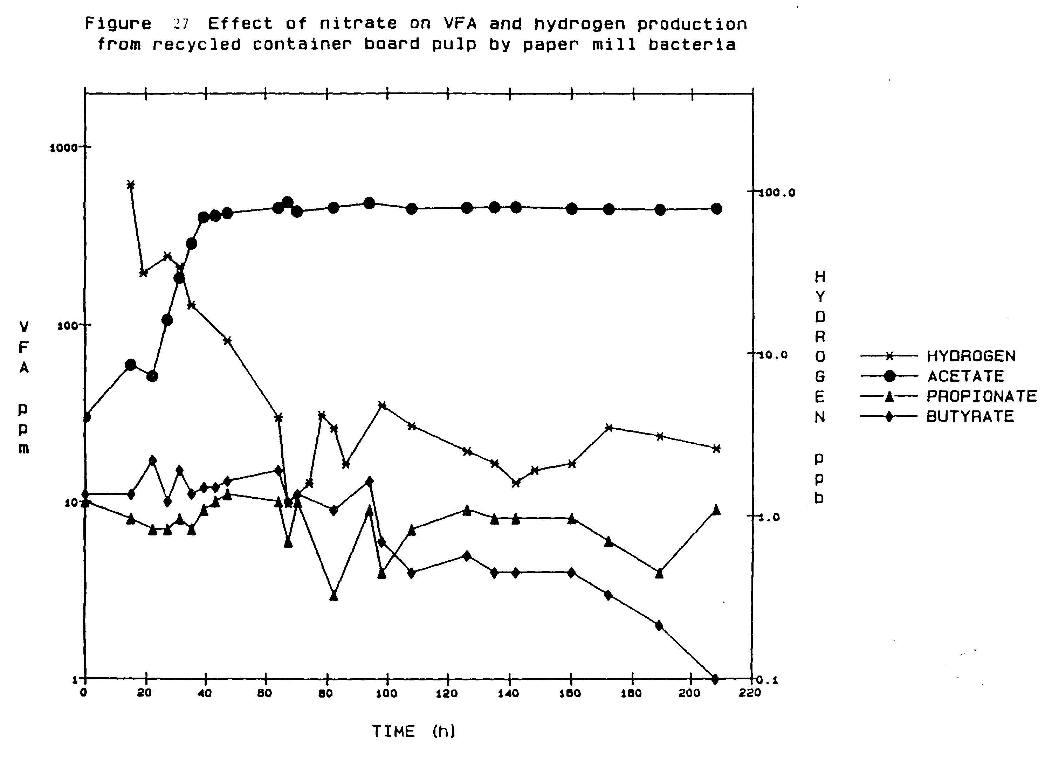

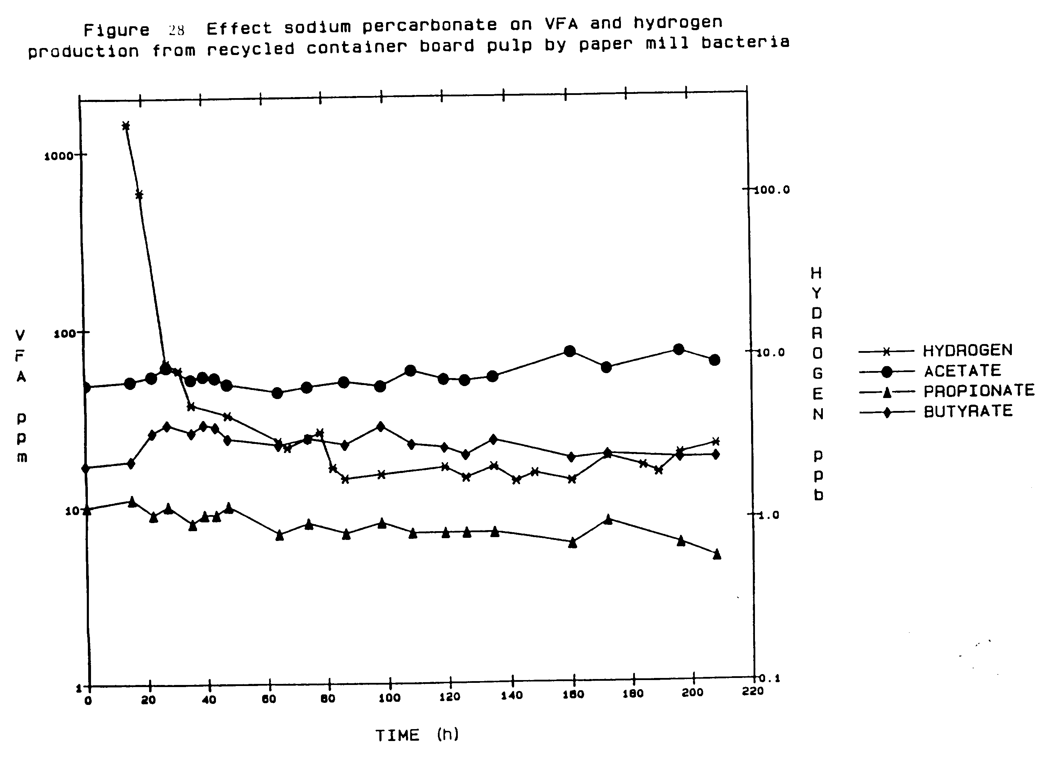

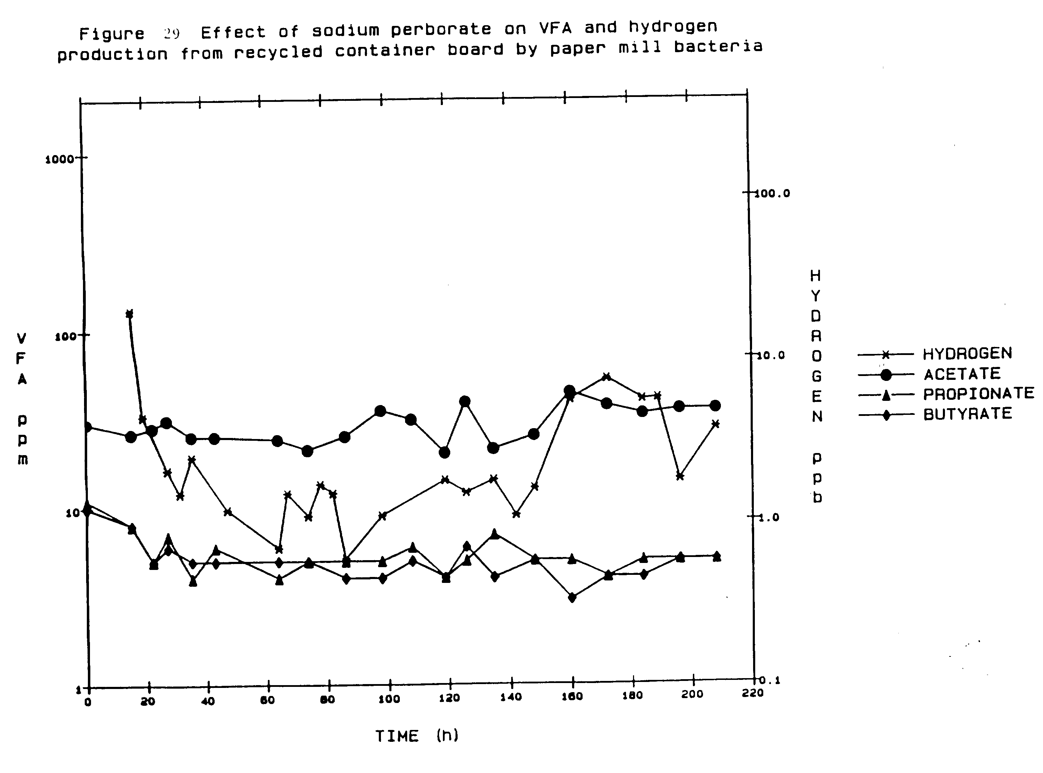

Figures 27, 28 and 29 show the effect of hydrogen and VFA production in chests treated after 15 hours of incubation with 1000 ppm of nitrate, perborate and percarbonate respectively. Figure 22 shows that nitrate completely inhibited propionate and butyrate production while acetate production occurred at lower concentrations than the untreated control shown in Figure 25. Figures 27 and 28 show that hydrogen and VFA production were completely inhibited in chests treated with percarbonate and perborate.

The examples demonstrate that perborates, sulfates, nitrates, permanganates, periodates, peroxides, percarbonates and oxides are effective acceptors of electrons generated in the anaerobic mineralization of complex organic molecules. The electron acceptors divert the electron flow from VFA formation to the reduction of the electron acceptors and thereby effectively inhibit VFA and H₂ production by bacteria in an anaerobic environment. These examples also demonstrate that materials such as cupric oxide, nitrate salts and alkali metal perborates exhibit low biocidal activity when used as electron acceptors to inhibit anaerobic bacterial metabolic product formation.

Thus the instant invention provides a method to inhibit the production of hydrolytic-fermentative bacterial metabolic products in an anaerobic environment, and by selection of the appropriate electron acceptor the inhibition can be accomplished non-biocidally. The method is particularly useful to inhibit production of hydrogen and VFA's in pulp or paper mills.

While this invention has been described with respect to particular embodiments thereof, it is apparent that numerous other forms and modifications of the invention will be obvious to those skilled in the art. The appended claims and this invention generally should be construed to cover all such obvious forms and modifications which are within the true spirit and scope of the present invention.

## Claims

1. A method for anticipating and for inhibiting the production and accumulation of volatile fatty acids by hydrolytic-fermentative bacteria in an anaerobic pulp and paper processing stream, said method comprising:
a) monitoring for the presence of hydrogen in an anaerobic pulp and paper processing stream; and
b) adding a biocide to said stream to inhibit the growth of bacteria and the subsequent bacterial production of and the accumulation of volatile fatty acids in said stream, when said monitoring identifies a concentration of 10 ppb or greater of hydrogen in said stream.

2. A method as claimed in claim 1 wherein said monitoring of said hydrogen is performed by continuous, on-line monitoring for hydrogen concentration or by periodic monitoring for hydrogen concentration.

3. A method as claimed in claim 1 or 2, wherein said pulp and paper processing stream has been subjected to both anaerobic and aerobic processing conditions.

4. A method for anticipating and for inhibiting the production and accumulation of propionate and butyrate by hydrolytic-fermentative bacteria in an anaerobic pulp and paper processing stream, said method comprising:
a) monitoring for the presence of acetate in an anaerobic pulp and paper processing stream; and
b) adding a biocide to said stream to inhibit growth of bacteria and the subsequent bacterial production of and the accumulation of propionate and butyrate in said stream, when said monitoring identifies acetate in said stream.

5. A method for inhibiting the formation of hydrolytic-fermentative metabolic products by bacteria in an anaerobic environment comprising adding a compound effective as an electron acceptor, in an amount sufficient for the purpose of anaerobic metabolic product formation inhibition, to said anaerobic environment.

6. A method as claimed in claim 5, wherein said electron acceptor is selected from the group consisting of compounds having perborate, sulfate, nitrate, permanganate, periodate, peroxide, percarbonate or oxide moieties.

7. A method as claimed in claim 5 or 6, wherein said electron acceptors are selected from the group consisting of alkali metal perborate, alkali metal peroxidosulphate, ammonium nitrate, alkali metal permanganate, alkali metal (para) periodate, alkali metal peroxide, alkali metal percarbonate, and alkali metal sulfate and cupric oxide.

8. A method as claimed in claim 5 or 6, wherein said electron acceptors are selected from the group consisting of alkali metal perborate, alkali metal nitrate, ammonium nitrate and alkali metal percarbonate.

9. A method as claimed in any one of claims 5 to 8, wherein said amount of electron acceptor sufficient for the purpose of anaerobic metabolic product inhibition is an amount sufficient to provide from a trace up to about 10,000 ppm of said electron acceptor in said anaerobic environment.

10. A method for anticipating and for inhibiting the production and accumulation of volatile fatty acids by hydrolytic-fermentative bacteria in an anaerobic pulp and paper processing stream comprising:
a) monitoring for the presence of hydrogen in an anaerobic pulp and paper processing stream; and
b) adding from a trace up to about 10,000 ppm of an electron acceptor selected from the group consisting of compounds having perborate, sulfate, nitrate, permanganate, periodate, peroxide, percarbonate or oxide moieties, to said stream to inhibit the growth of bacteria and the subsequent bacterial production of and accumulation of volatile fatty acids in said stream, when said monitoring identifies a concentration of 10 ppb or greater of hydrogen in said stream.

11. A method as claimed in claim 10, wherein said electron acceptors are selected from the group consisting of alkali metal perborate, alkali metal peroxidosulphate, ammonium nitrate, alkali metal permanganate, alkali metal (para) periodate, alkali metal peroxide, alkali percarbonate, alkali metal sulfate and cupric oxide.

12. A method as claimed in claim 10, wherein said electron acceptors are selected from the group consisting of alkali metal perborate, alkali metal nitrate, ammonium nitrate and alkali metal percarbonate.
